# EUROPÄISCHE PATENTSCHRIFT

(11) **EP 1 141 970 B1**
(45) Veröffentlichungstag und Bekanntmachung des Hinweises auf die Patenterteilung: **22.03.2006**
(21) Anmeldenummer: 00904841.4
(22) Anmeldetag: 07.01.2000
(51) Int. Cl.: G21C 7/107, G21C 1/07, G21C 9/027

(54) **REAKTORSYSTEM UND STEUERVERFAHREN**
REACTOR SYSTEM AND METHOD FOR ITS CONTROL
SYSTEME DE REACTEUR ET PROCEDE DE COMMANDE

(30) Priorität: 08.01.1999 ZA 9900128
(43) Veröffentlichungstag der Anmeldung: 10.10.2001
(73) Patentinhaber: Forschungszentrum Jülich GmbH, 52425 Jülich (DE)
(72) Erfinder: SCHERER, Winfried, D-52428 Jülich (DE); GERWIN, Helmut, D-52428 Jülich (DE)
(86) Internationale Anmeldenummer: PCT/DE2000/000106
(87) Internationale Veröffentlichungsnummer: WO 2000/041184

(56) Entgegenhaltungen:
- DE-A- 3 335 452
- DE-A- 3 345 494
- US-A- 3 257 286
- US-A- 4 372 912
- US-A- 4 545 954
- US-A- 4 789 519
- US-A- 4 917 855

## Beschreibung

Die vorliegende Erfindung betrifft einen Kernreaktor mit einem System bzw. mit Systemen zur Steuerung einer Leistungsregulierung- und Leistungsabschaltung auf der Basis einer Neutronenabsorption unter Verwendung beweglicher Neutronen-Absorberkörper, und ein Verfahren zum Regulieren der Leistungsabgabe eines Kernreaktors.

Es ist zur Zeit bei Kernreaktoren gängige Praxis, wenigstens zwei unabhängige Abschaltsysteme zu verwenden. Sie dienen dazu, die nukleare Kettenreaktion zu beenden. Eines dieser Systeme kann zudem auch zur Regulierung des Reaktorbetriebs verwendet werden, das heißt, der Leistungsabgabe und des Leistungsabgabeprofils. Die Abschaltsysteme arbeiten üblicherweise so, daß sie ein neutronenabsorbierendes Material in den Kern oder in seine Nähe (z. B. in den umgebenden Reflektor) einführen. Die Menge solcher einzuführenden Absorber muß ausreichen, um eine angemessen schnelle und, wo dies angebracht ist, abschaltende Wirkung zu gewährleisten, z. B. in allen Betriebs- und Zwischenfallsituationen bei Auftritt einer Temperaturänderung und/oder nach einem Zerfall von Xe¹³⁵.

Für den Fall, daß ein Abschaltsystem auch zur Regulierung verwendet wird, werden diese Absorber im normalen Betrieb nicht ganz aus ihrer Wirkposition entfernt, so daß bei einer weitergehenden Entfernung die Reaktivität erhöht werden kann, das heißt, die Geschwindigkeit der Kernspaltung erhöht werden kann. Eine Abschaltfunktion wird indessen erhalten, indem weitere Absorber in die Wirkpositionen bewegt werden, wodurch die Kettenreaktion zum Abbruch gebracht wird.

Der sogenannte Hochtemperaturreaktor (HTR) hat in jüngster Zeit einige Bekanntheit erworben. Sein Name entspringt der Tatsache, daß er aufgrund seiner Graphitkonstruktion in der Lage ist, Wärme mit hohen Temperaturen zu erzeugen. Ein spezieller Typ eines HTR ist der Schüttkugel- bzw. Kugelhaufenreaktor. Dieser durchlief eine Reihe von fortschreitenden Entwicklungsstufen, die jeweils bekannt sind als AVR (Arbeitsgemeinschafts Versuchs Reaktor , welcher eine Wärmeleistungsabgabe von 46MW hatte, für eine Helium-Ausgangstemperatur von 850°C ausgelegt war, experimentell aber unter bis zu 1000°C betrieben wurde und in Jülich, Deutschland, stationiert ist); THTR (Thorium-Hochtemperaturreaktor; Wärmeleistungsabgabe 750MW, stationiert in Uentrop, Deutschland); MODUL-HTR (ein modulares Kugelhaufenreaktorkonzept mit einer Wärmeleistungsabgabe von 200MW, entwickelt in Deutschland). Eines der Kennzeichen des Kugelhaufenreaktors liegt darin, daß während seines Betriebs neue sphärische Brennstoffelemente in seinen Kern eingeführt werden und bedarfsweise alte aus diesem entfernt werden können. Diese Eigenschaften ermöglichen es, das Regulationssystem von seiner Aufgabe zu entlasten, den Verbrauch nuklearen Brennstoffs durch das Herausziehen von Absorbermaterial zu kompensieren. In diesen Systemen muß das Regulationssystem nur noch reaktive Schwankungen kompensieren, die durch Temperaturänderungen aufgrund einer Veränderung der Xe¹³⁵⁻Konzentration und ähnlicher weniger bedeutender Effekte auftreten.

In den Abschalt- und Regulierungssystemen werden üblicherweise Stäbe verwendet, in welchen das absorbierende Material in Metallrohren eingeschlossen ist. Wenn der Kugelhaufenkern richtig konstruiert ist, können solche Stäbe in Staböffnungen eingeführt werden, die dafür in den seitlichen Reflektoren vorgesehen sind. Daneben ist es möglich, wie es bisher nur für Abschaltzwecke in dem zweiten Abschaltsystem des MODUL-HTR-Konzepts erfolgt ist, den Absorber in kleinen Kugeln statt in Stäben einzuschließen. Solche Kugeln sind als "small absorber spheres" (SAS) in Übersetzung des ursprünglichen deutschen Ausdrucks "Kleine Absorber Kügelchen" (KLAK) bekannt geworden. Diese SAS-Körper sind aus Graphitkügelchen zusammengesetzt, die Bor oder Borcarbid enthalten. Die SAS werden in sogenannte vertikale SAS-Löcher oder -führungen eingeführt. Zum Entfernen der SAS aus ihren Wirkpositionen ist es ständige Praxis, diese schwerkraftmäßig von den unteren Enden solcher SAS-Löcher oder -führungen abzuziehen. Sie werden dann pneumatisch in den Zuführbehälter der SAS-Führungen zurückgebracht. Die wichtigsten Unterschiede in ihren Eigenschaften zwischen Stäben und SAS sind:
1. SAS sind weniger temperaturempfindlich als Metallstäbe
2. Während Stäbe vom Boden wie auch von oben eingeführt werden können und, falls sie als kurze Stäbe ausgebildet sind, in verschiedenen Positionen angeordnet werden können, sammeln sich SAS aufgrund der Schwerkraft am Bodenende jeder SAS-Führung und müssen schwerkraftmäßig nachgefüllt werden, um höhere Niveaus zu erreichen oder aus diesen nach unten herausgezogen werden, um Absorptionsniveaus zu senken.

In vielen Reaktoren werden Absorbermaterialien bis heute insbesondere in Form von vorgenannten Stäben verwendet, um in einer kontrollierten, gewünschten Weise das Leistungsabgabeprofil, insbesondere das Wärmeabgabeprofil, zu beeinflussen, gewöhnlicherweise deshalb, um ein solches Profil zu abzuflachen. Dies wird auch in dem HTR so gemacht, hauptsächlich deshalb, um örtlich begrenzte, hohe Strahlungsdosen in dem Graphitreflektor zu vermeiden. In einem Kugelhaufen-HTR steigt die Konzentration des verbrauchten Brennstoffs in Abwärtsrichtung. Demgemäß liegt das Maximum der Leistungsabgabe gewöhnlich in der oberen Hälfte des Kerns. Dieses Profil der maximalen Leistungsabgabe der oberen Hälfte, und auch das sich daraus ergebende Profil/Produktionsverhältnis von schnellen Neutronen, kann abgeflacht werden, falls eben der Teil der Absorberkörper des Regulierungssystems, welcher für die Regulierung der Leistungsabgabe verwendet wird, unter normalen Betriebsbedingungen nahe diesem Maximum positioniert ist. Ein Herausziehen aus dieser Position der Maximalwirkung löst eine Reaktivität aus, wohingegen die Einführung von weiterem Absorbermaterial eine solche Aktivität verringert und gegebenenfalls zu einem Abschalten führt. Um diese Eigenschaft des Regulierungssystems vollständig nutzen zu können, aber auch, um die Kosten solcher Steuervorgänge zu minimieren, wurde das Regulierungssystem im allgemeinen so ausgebildet, daß es mit Stäben arbeitet. SAS wurden in der Vergangenheit nur für das zweite Abschaltsystem verwendet, das heißt, nur für die vollständige Abschaltung ausgebildet. In solchen Abschaltsystemen, die SAS herkömmlicherweise von 10 mm Durchmesser verwenden, sind die folgenden Formen von SAS-Führungen bekannt:
A) Gerade vertikale Durchgänge in dem Reflektor mit einem runden Durchgangsquerschnitt. Sie sind am einfachsten herzustellen und haben gewöhnlich einen Durchmesser von 80 bis 130 mm.
B) Gerade vertikale Durchgänge von länglichem Querschnitt, deren breitere Seitenflächen dem Kern entgegengerichtet sind, sind effektiver, obwohl sie potentiell anfälliger für Strahlungsschäden sind. In den MODUL-Reaktoren liegen ihre Querschnittsabmessungen über alles üblicherweise bei 260x60 mm mit halbkreisförmigen Enden.
C) Doppelt oder mehrfach eng aneinanderliegende, gerade, vertikale Durchgänge, welche etwa ebenso wirksam wie B) und weniger anfällig für Beanspruchungsschäden sind.

Im Falle eines Kugelhaufen-HTR, dessen Kühlgas direkt dazu dient, eine mit einem gasförmigen Medium betriebene Turbine anzutreiben, ist die Temperatur des Kühlgases deutlich höher als in früheren Reaktoren und Reaktorkonzepten. Dies ist eine Ursache potentieller Probleme, wenn die herkömmlichen Absorbenzstäbe für das erste Abschalt- und Reguliersystem verwendet werden, und zwar aufgrund der eingeschränkten Toleranz der Metallmäntel solcher Stäbe gegenüber hohen Temperaturen. Andererseits kann auf die herkömmlichen Absorbenzstabsysteme des gegenwärtigen Standes der Technik nicht verzichtet werden, ohne dadurch die auf den Reflektor ausgeübte Strahlenbelastung zu erhöhen. Dies wiederum hätte einen sehr ungünstigen Einfluß auf die Lebenserwartung des Reaktors.

Es hat sich deshalb ein Bedürfnis für eine Alternative zu den herkömmlichen Absorbenzstäben im ersten Regulierungs- und Abschaltsystem entwickelt, welche die Probleme der Wärmeempfindlichkeit herkömmlicher Stäbe ohne Verlust des Reguliervermögens und des Schutzes des Reflektors gegenüber einer Strahlungsüberlastung zu beseitigt oder abschwächt.

Aus dem Stand der Technik sind Führungssysteme für Kernreaktoren bekannt. Beispielsweise ist aus US 3,257,286 ein Wasserstoffreaktor bekannt, bei dem die Regelung der Leistungsabgabe über Führungskanäle erfolgt, die innerhalb des Reaktors liegen. Aus DE 3 335 452 ist ein Kernreaktor mit Führungskanälen bekannt, die im Bereich des Cores des Reaktors im Reflektor der Seitenwand des Reaktors verlaufen. Diese Regelungssysteme lassen jedoch innerhalb der Führung nur von unten gestapelte Absorberkugeln zu. Diese Füllung kann nur durch weitere Zugabe von Absorberkugeln von oben in der Höhe zunehmen oder durch Ausbringen am unteren Ende des Führungen in der Höhe reduziert werden. Eine graduelle Variation im Bereich des Cores des Reaktors ist nicht möglich.
Die vorliegende Erfindung liefert einen Kernreaktor, wie er im Eingangsabsatz dargestellt wurde, in welchem ein Reguliersystem, das zur Regulierung der Leistungsabgabe eines Reaktors ausgebildet ist, ein Führungssystem umfaßt, das mit schwerkraftmäßig zugeführten, frei fließfähigen, kiesartigen Neutronenabsorptionskörpern auf einstellbar Niveaus in einer Anordnung beladen oder beladbar ist, die so ausgebildet ist, daß an einem Kernbereich, an dem unter vorgesehenen Betriebsbedingungen eine maximale Leistungsabgabe vorherrscht, ein maximales Neutronenabsorptionsvermögen vorliegt, und diesem in Abwärtsrichtung ein Bereich folgt, der ausgebildet ist, um für eine verminderte oder nullwertige Neutronenabsorption zu sorgen.

Insbesondere liefert die vorliegende Erfindung eine Kernreaktion, wie sie in dem Eingangsabsatz dargelegt ist, in welcher ein System zur Regulierung der Leistungsabgabe sogenannte Kleine Absorber Kügelchen (SAS) als Neutronenabsorbierkörper in einer Anordnung verwendet oder verwenden kann, die so vorgesehen ist, daß sie für eine maximale Neutronenabsorptionswirkung in einem Bereich an dem Teil des Reaktorkerns sorgt, an dem die maximale oder maximumnahe Leistungsabgabe vorherrscht, und die Neutronenabsorptionswirkung zu einem Kernbereich oder zu Kernbereichen hin nachläßt, an denen die Leistungsabgabe selbst bei nicht vorhandener Kernvergiftung reduziert ist.

Der Ausdruck "Kernvergiftung" bezieht sich auf eine durch Neutronenabsorption induzierte Reduktion der Leistungsabgabe.

Die Erfindung wird vorzugsweise bei Reaktoren des Hochtemperaturreaktortyps (HTR) angewendet, und insbesondere auf Reaktoren, die so ausgelegt sind, daß frischer Kernbrennstoff mit oder ohne wiederaufbereitetem, teilweise verbrauchtem Brennstoff an einem Ende eingeführt wird, und verbrauchter Brennstoff mit oder ohne teilweise verbrauchtem Brennstoff von einem gegenüberliegenden Ende abgezogen wird, und in welchen die SAS in einer Anordnung gehalten werden, die so ausgebildet ist, daß sie eine maximale Neutronenabsorptionswirkung in einem Bereich angrenzend oder nahe des Teils eines Reaktorkerns liefert, an dem der durch den Reaktor hindurchgehende Brennstoff eine maximale oder maximumnahe Leistungsabgabe erreicht, und daß sie eine Verminderung oder gegen Null gehende Neutronenabsorptionswirkung in Bereichen an solchen Kernregionen liefert, an denen die Brennstoffaktivität bereits reduziert ist. Eine bevorzugte Ausführungsform ist die des Kugelhaufentyps.

Für jeden gegebenen Reaktor hängt das Niveau bzw. hängen die Niveaus (in Bezug zum Reaktorkern), an welchen eine Änderung/Änderungen von der maximalen Absorptionswirkung hin zu einer geringeren oder gegen Null gehenden Absorptionswirkung bzw. -wirkungen stattfinden sollten, sehr stark von der Art und Weise der Brennstoffzuführung in den Reaktor ab. Vorzugsweise ist die Anordnung so ausgelegt, daß sie einen maximalen oder maximumnahen Absorptionseffekt im Bereich an oder nahe an der oberen Hälfte des Reaktorkerns und eine verminderte oder gegen Null gehende Absorptionswirkung in einem Bereich liefert, von wo aus die Leistungsabgabe des nicht-vergifteten Kerns bis etwa 1/2 bis 1/3 derjenigen beträgt, wo die maximale Leistungsabgabe vorherrscht. Insbesondere beginnt der Bereich der verminderten oder gegen Null gehenden Absorptionswirkung auf einem Niveau von nicht weniger als 1/10 der gesamten Kernlänge oberhalb des Bodenreflektorbereichs des Reaktors.

Im allgemeinen gilt, daß, wenn der Reaktor ein Reaktor mit mehrfachem Brennstoffdurchsatz ist, der maximale Leistungsabgabesbereich des Kerns auf einem Niveau zwischen 50 und 70% der gesamten Kernhöhe liegt und sich der Bereich der Anordnung, der eine maximale Absorptionswirkung liefert, nach unten auf ein Niveau von nicht mehr als 30% der gesamten Kernhöhe oberhalb des Bodenreflektorbereichs des Reaktors ausdehnt.

Andererseits wird, wenn der Reaktor nach der Brennstoffbeladungsart Einmal-Durch-Dann-Hinaus (Once Through Then Out, OT-TO) betrieben wird, der Bereich des Kerns der maximalen Leistungsabgabe im allgemeinen auf einem Niveau zwischen 66 und 75% der gesamten Kernhöhe liegt, wobei sich der Bereich der Anordnung, der die maximale Absorptionswirkung liefert, nach unten bis auf ein Niveau oberhalb 40% der gesamten Kernhöhe oberhalb des Bodenreflektorbereichs des Kerns ausdehnt. Insbesondere erstreckt sich der Bereich der Anordnung, der die maximale Absorptionswirkung liefert, nach unten bis zu einem Niveau von nicht weniger als 50% der gesamten Kernhöhe oberhalb des Bodenreflektorbereichs des Kerns.

In Übereinstimmung mit den bevorzugten Ausführungsformen umfaßt die Anordnung nach unten gerichtete Führungen, die eine Charge SAS halten oder angepaßt sind, diese zu halten, welche in einem die Seitenwände des Reaktors umgebenden Reflektor aufgenommen sind. In solchen Ausführungsformen kann die Verminderung der Neutronenabsorptionswirkung z. B. herbeigeführt werden durch
a) eine Reduktion im Querschnitt von einer oder mehreren der Führungen; oder
b) einen zunehmenden Abstand einer oder mehrerer der Führungen von den Wänden des Kerns; oder
c) einen Wechsel in der Querschnittsgestaltung einer oder mehrerer der Führungen; oder
d) eine Kombination von zwei oder mehr Merkmalen unter a) bis c).

Es sei so verstanden, daß für d) die Niveaus, an welchen eine Reduktion im Querschnitt oder eine Zunahme im Abstand oder ein Wechsel in der Querschnittsgestaltung in Kombination erfolgt, nicht identisch sein müssen.

Die obige Ausführung a) kann exzentrisch herbeigeführt werden, z. B. um eine Kombination von a) und b) zu erhalten. Eine Mehrzahl von eng aneinandergrenzender Führungen kann kombiniert werden, um in eine einzelne verengte gemeinsame Führung einzutreten.

Um eine Blockierung zu vermeiden, wird empfohlen, daß die Querschnittsverengungen den Führungsdurchmesser nicht auf weniger als 6 SAS-Durchmesser reduzieren sollten.

Vorzugsweise ist die Querschnittsreduktion trichterförmig mit einem spitzen Zulauf, welcher vorzugsweise eine Neigung von nicht mehr als 45° in bezug zur Mittellinie hat und tatsächlich sehr spitz ist, was zu einer stark fortschreitenden Reduktion der Absorptionswirkung führt. Der spitze Zulauf muß nicht konstant sein. Vorzugsweise ist der Übergang von einem Abschnitt mit konstantem maximalem Querschnitt (dort, wo eine maximale Absorptionsleistung vorliegt) zu einem trichterförmigen Abschnitt abgerundet. Ebenso kann, wenn der trichterförmige Abschnitt in einen eingeengten Abschnitt mit konstantem Querschnitt übergeht, der Übergang wiederum abgerundet sein.

In einer Ausführung von b) wird der Abstand durch eine kurbelförmige Kurvenlinie der Führung bzw. der Führungen vergrößert. Wiederum kann die kurbelförmige Kurvenlinie durch gerundete Biegungen geformt sein. Wiederum hat der Übergangsbereich, der von dem Bereich der maximalen Absorption, der dem Kern am nächsten liegt, nach unten zu dem Führungsbereich minimaler Absorption, deren Kern am entferntesten liegt, führt, vorzugsweise einen Winkel zur Vertikalen von nicht mehr als 45° und ist vorzugsweise steiler, um nicht nur für einen ungehinderten Schwerkraftfluß der SAS zu sorgen, sondern auch für eine stärkere graduelle Reduktion der Absorptionsleistung. Dieser Übergangsbereich kann zudem spitz zulaufen, wie im Falle der Ausführung a). Der Führungsbereich, der dem Kern am weitesten entfernt liegt, kann eine geringere Querschnittsfläche haben, als der Führungsbereich, der dem Kern am nächsten liegt.

Schließlich kann bei Ausführungen c) ein Führungsabschnitt von z. B. rundem Querschnitt, in relativer Nähe zum Kern für eine maximale Absorptionswirkung, vorzugsweise graduell in einen unteren Führungsabschnitt von z. B. gleicher oder kleinerer Querschnittsfläche, aber mit länglichem Querschnitt, mit einer dem Kern am nächsten liegenden, relativ schmalen Seite, für eine reduzierte Absorptionswirkung, übergehen. Dieser untere Führungsbereich kann wie in Ausführungen b) von dem Kern weiter entfernt sein als der obere Führungsbereich.

Eine noch größere Differenz zwischen einer maximalen und einer minimalen Absorptionsfähigkeit wird erhalten, wenn der obere Führungsbereich einen länglichen Querschnitt hat, der mit einer seiner breiten Seiten kernnah und auf den Kern gerichtet ist. Alternativ kann der obere Führungsbereich in eine Mehrzahl von eng aneinandergrenzender Durchgänge unterteilt sein, die jeweils dem Kern naheliegen.

Es wird klar, daß zahlreiche Variationen dieses Prinzips eines (vorzugsweise progressiven) Übergangs von einem (oberen) Führungsabschnitt für eine maximale Absorptionsempfindlichkeit gegenüber originär vom Kern stammenden Neutronen zu einem (unteren) Führungsabschnitt hin, welcher eine minimale Absorptionsempfindlichkeit gegenüber originär im Kernbereich generierten Neutronen bietet, nämlich dort, wo die Kernaktivität bereits reduziert ist, vorstellbar sind, ohne von dem Erfindungskonzept abzuweichen. Offensichtlich ist dieses Konzept nicht auf runde Führungen oder einen einfachen länglichen Querschnitt (z. B. rechtwinklig mit gerundeten, schmalen Stirnseiten oder ellipsoid) beschränkt, sondern kann z. B. auch auf ungefähr dreieckige Führungsquerschnitte angewendet werden, falls sich solche Querschnitte aus irgendwelchen Gründen vorteilhaft erweisen sollten. In einem solchen Fall würde eine relativ breite Seite eines dreieckigen Querschnitts für den oberen Führungsbereich nahe am Kern und diesem entgegen gerichtet angeordnet sein, wohingegen in dem unteren Führungsbereich mit geringer Absorption eine vorzugsweise spitzwinklige Ecke zum Kern gerichtet sein würde.

Während in der Vergangenheit SAS im allgemeinen nicht kleiner als 10 mm im Durchmesser waren, wird die Erfindung vorzugsweise mit SAS durchgeführt, die einen Durchmesser von weniger als 10 mm aufweisen, vorzugsweise von etwa 4 bis 8 mm und ganz bevorzugt etwa 5 mm. Mit solchen kleinen Durchmessern ist es weniger wahrscheinlich, daß sie Verstopfungen in verengten Teilen der SAS-Führungen bewirken, und sie können sogar aufgrund ihrer größeren spezifischen Oberflächen verbesserte Neutronenabsorptionswirkungen liefern. Ebenso würden die kleineren Kügelchen in Fällen vorteilhaft sein, in welchen verbesserter Wärmeaustauscheigenschaften wünschenswert sind.

Die Erfindung ist insbesondere nützlich für den direkten Einsatz der Energieleistungsabgabe beim Betrieb von Turbinen mit Helium oder anderen gasförmigen Medien, bei welchen hohe Ausgangstemperaturen erforderlich sind.

Gemäß einem weiteren Aspekt der Erfindung ist ein Verfahren vorgesehen zum Regulieren der Leistungsabgabe eines Kernreaktors durch Absorbieren von Neutronen unter Verwendung von neutronenabsorbierenden Körpern, wobei Neutronen unter Verwendung eines Regulierungssystems absorbiert werden, das so ausgelegt ist, daß die Reaktorleistungsabgabe mit einem Führungssystem reguliert wird, das mit schwerkraftmäßig zugeführten, frei fließfähigen, kugelartigen Neutronenabsorptionskörpern auf einstellbare Niveaus befüllt oder entladen werden kann, in einer Anordnung, die so ausgebildet ist, daß sie für ein maximales Neutronenabsorptionsvermögen an einem Kernbereich sorgt, an dem unter gewünschten Betriebsbedingungen eine maximale Leistungsabgabe vorherrscht, und dem in Abwärtsrichtung ein Bereich folgt, der so ausgelegt ist, daß er für eine verminderte oder nullwertige Neutronenabsorption sorgt.

Insbesondere werden die Neutronen absorbiert, indem als Absorptionskörper dienende SAS in dem Reflektor des Reaktors derart in einer Anordnung plaziert werden, daß sie in einem Bereich angrenzend an einen Teil des Reaktorkerns, an dem eine maximale oder fast maximale Leistungsabgabe vorherrscht, eine maximale Absorptionswirkung liefert und sich die Neutronenabsorptionswirkung in Richtung auf einen Bereich oder Bereiche angrenzend an den Kern, wo selbst bei nicht vorhandener Kernvergiftung die Leistungsabgabe verringert ist, vermindert.

Die oben in Verbindung mit dem Reaktor beschriebenen verbleibenden Merkmale und Einzelheiten finden analog auch auf das Verfahren Anwendung.

Der Schutzbereich der Erfindung erstreckt sich auf SAS, die an die Erfindung angepaßt sind, indem sie einen Durchmesser von weniger als 10 mm, vorzugsweise 4 bis 8 mm und ganz bevorzugt etwa 5 mm haben.

Die Erfindung sieht ferner ein Reguliersystem zum Regulieren der Leistungsabgabe eines Kernreaktors durch Absorbieren von Neutronen unter Verwendung von neutronenabsorbierenden Körpern vor, in welchem die Neutronen absorbiert werden, indem als Absorptionskörper dienende SAS in den Reflektor des Reaktors in einer Anordnung plaziert werden, die in einem Bereich eine maximale Neutronenabsorptionswirkung liefert und ausgebildet ist, um das Niveau/die Niveaus der SAS in Abhängigkeit von einer Regeleingabe auf Anforderung einer Zunahme oder Abnahme einer Energieleistungsabgabe in einer vorstehend beschriebenen Anordnung zu regulieren.

Im folgenden wird die Erfindung weiter mit Bezug auf die beigefügten Zeichnungen beschrieben.

In den Zeichnungen zeigen:
Figur 1 einen schematischen Längsschnitt eines Reaktors des modularen Kugelhaufen-HTR, auf welchen die Erfindung angewendet werden kann;
Figuren 2 bis 5 schematische vertikale Schnitte von Bereichen von SAS-Führungen, die in einem Reaktor gemäß der Erfindung verwendet werden sollen, die in einer radialen Richtung zur Kernachse liegen;
Figur 6 einen schematischen vertikalen Schnitt einer weiteren Ausführungsform einer SAS-Führung, und
Figuren 7 bis 9 schematische Horizontalschnitte, die die Umrisse der Führungen in Figur 6 an unterschiedlichen Niveaus VII-VII, VIII-VIII bzw. IX-IX zeigen.

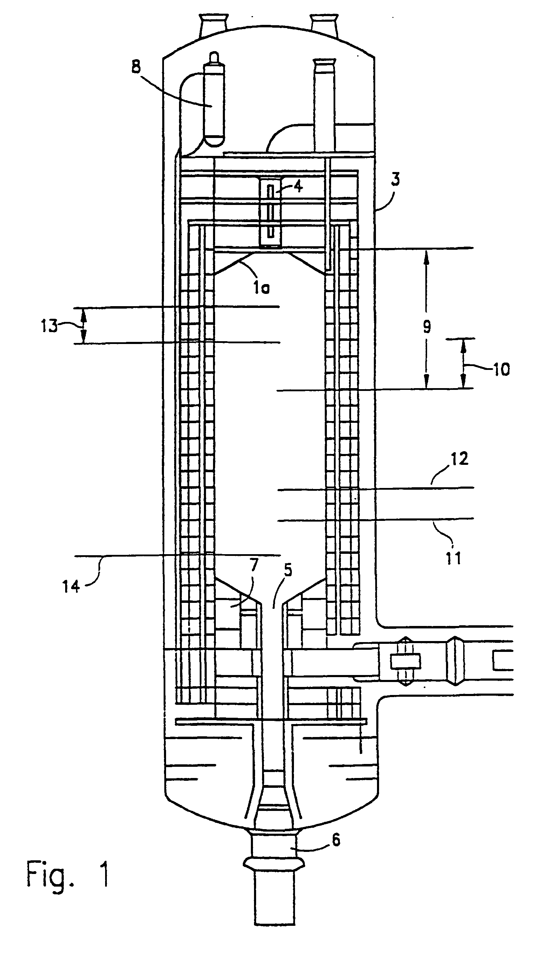

Nun Bezug nehmend auf Figur 1 der Zeichnungen, ist dort ein schematischer, vertikaler Längsschnitt eines mit gehäuftem kugelförmigem Brennstoff (Kugelhaufen) betriebenen HTR-Reaktors der MODUL-HTR-Betriebsart dargestellt, der für die Verwendung in Übereinstimmung mit der vorliegenden Erfindung modifiziert ist. Das Bezugszeichen 1 stellt den Kern des bis zu dem konischen oberen Niveau 1a mit einem Brennstoffhaufen gefüllten Reaktors dar. Das Bezugszeichen 2 stellt den Reflektor dar, der mit Ausnahme des äußersten Bereichs, welcher aus einem niederwertigeren Graphit hergestellt ist, aus einem hochreinen Graphit aufgebaut ist. Die gesamte Einheit ist von einem Stahlreaktorbehälter 3 mit einem Verbindungsrohr 3a für das Kühlgas, z. B. Helium, umschlossen. Der Brennstoffeinlaß ist durch 4 und der durch eine Auslaßsteuerung 6 gesteuerte Brennstoffauslaß durch 5 dargestellt. Das Bezugszeichen 7 stellt den Bodenreflektorbereich dar.

Während in der Vergangenheit ein Reaktor der MODUL-HTR-Betriebsart durch ein erstes Abschalt- und Reguliersystem, das durch ein Metall eingeschlossene Neutronenabsorberstäbe umfaßt, und ein zweites Abschaltsystem, das insgesamt mit SAS betrieben wird, reguliert wurde, wird das erste Abschalt- und Reguliersystem nun durch ein vollständig ebenfalls mit SAS betriebenes System ersetzt. Beide Systeme umfassen SAS-Führungen (nicht im Detail dargestellt), die in verschiedenen Positionen über den Reflektorkörper verteilt aufgenommen sind und mit SAS von SAS-Speichergefäßen 8 versorgt werden, von welchen nur eines dargestellt ist, um das Niveau der SAS in der Führung auf ein gewünschtes Niveau für das erforderliche Maß der Neutronenabsorption anzuheben. Zum Verringern des Niveaus von SAS in der Führung, um eine Neutronenabsorption zu reduzieren, werden SAS durch Schwerkraft von den Bodenenden der Röhren abgezogen und pneumatisch zu den SAS-Speichergefäßen 8 zurückbefördert.

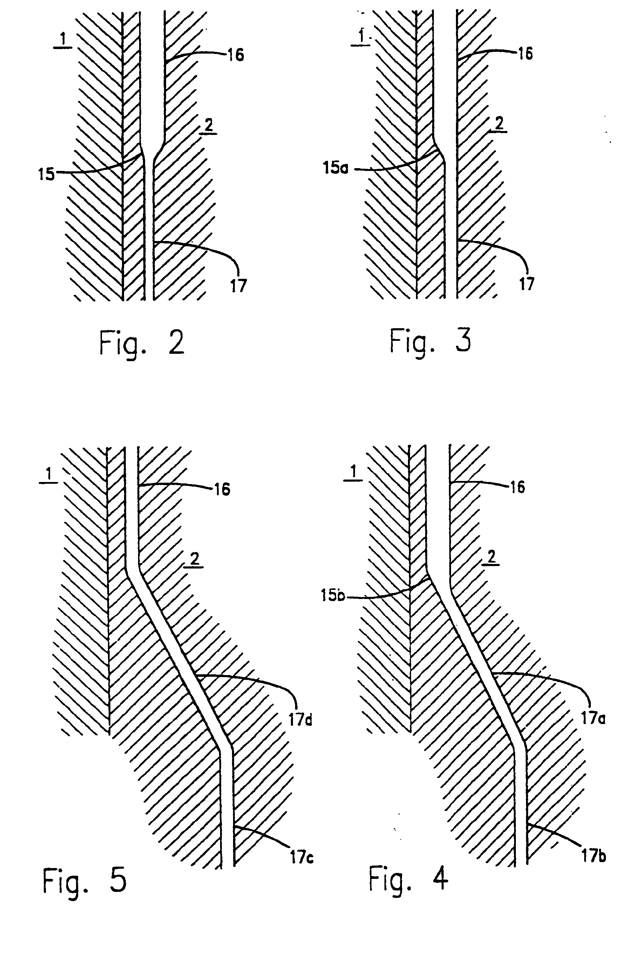

In Übereinstimmung mit der Erfindung haben solche Führungen, welche zum Regulieren der Reaktorleistungsabgabe gedacht sind, spezielle Konfigurationen, von welchen einige später mit Bezug auf die Figuren 2 bis 9 beschrieben werden. Das Maß einer durch die Führungen zugelassenen Neutronenabsorption, wenn diese mit SAS beladen sind, ist auf einem speziellen Niveau in Bezug zum Kern abhängig von der Nähe der Führung zum Kern sowie der Breite der Führung in dem Bereich, der dem Kern entgegen gerichtet ist. Wie weiter oben allgemeiner ausgedrückt wurde, gibt es eine Anzahl von Niveaus in Bezug zum Kern 1, welche die Niveaus der Führung begrenzen, von welchen an in Übereinstimmung mit der Erfindung besondere Änderungen im Maß der Regulierungsfunktionen unter spezifischen Betriebsbedingungen durchgeführt werden müssen, wobei diese Niveaus mit der Betriebsweise variieren, in welcher der Reaktor betrieben wird. Im allgemeinen ist die Anordnung so gestaltet, daß sie eine maximale oder fast maximale Absorptionswirkung im Bereich an oder nahe an der oberen Hälfte 9 des Reaktorkerns liefert, wobei die untere Hälfte den Bereich unterhalb von 9 darstellt, in welchem sich an einem geeigneten Niveau die Absorptionswirkung vermindert oder Null wird.

Ein Bereich 10 bezeichnet den Bereich zwischen 50 und 70% der Gesamtkernhöhe, in welchem normalerweise maximale Absorptionswirkungen erzielt werden, und Bezugszeichen 11 bezeichnet ein Kernhöhenniveau von 30% oberhalb des Bodenreflektorbereichs 7. Der Bereich der maximalen Absorptionswirkung erstreckt sich üblicherweise zu einem Niveau von nicht mehr als 30% des Kernhöhenniveaus 11.

Wenn der Reaktor der Einmal-Durch-Dann-Hinaus (OTTO)-Betriebsweise für die Brennstoffbeladung arbeitet, befindet sich der Bereich der maximalen Leistungsabgabe des Kerns im wesentlichen auf dem Niveau zwischen 66 und 75% der Gesamtkernhöhe, dargestellt durch den Bereich 13, der sich nach unten zu einem Niveau etwas oberhalb von 40% (Niveau 12) der Kernhöhe ausdehnt.

Falls andererseits der Reaktor mit wiederholt zurückgeführtem Brennstoff betrieben wird, werden die bei 5, 6 aus dem Kern abgezogenen Brennstoffkörper analysiert und wird das Maß Ihres Verbrauchs festgestellt. In dieser Weise können sie von 4 bis zu etwa zwanzig Mal wiederholt genutzt werden, bevor sie durch neue Brennstoffelemente ersetzt werden. In diesem Falle liegt das Maximum der Leistungsabgabe im wesentlichen zwischen der hälftigen Niveaumarkierung (unteres Ende des Bereichs 9) und dem oberen Drittel (unteres Ende von Bereich 13) in Figur 1.

Ein Reaktorniveau 14 bezeichnet ein Niveau bei 1/10 der Gesamtkernhöhe, und gewöhnlich erstreckt sich der Bereich der verminderten oder nullwertigen Absorptionswirkung von diesem Niveau nach oben oder höher bis zu dem geeigneten höheren Niveau, an welchem eine maximale Absorption vorherrscht.

Figur 2 stellt eine Konfiguration einer SAS-Führung dar, in welcher das Vermindern der Absorptionswirkung durch eine Verengung 15 in einer Führung herbeigeführt wird, welche einen oberen Abschnitt 16 mit weiterem Querschnitt und einen verengten Abschnitt 17, welcher einen Durchmesser von nicht weniger als das Sechsfache des SAS-Durchmessers hat, aufweist. Ein Abschnitt 16 mündet graduell in den trichterförmigen Bereich 15 und geht von dort in abgerundeter Weise in den engen rohrförmigen Abschnitt 17 über. Der obere Abschnitt 16 ist in dem Reflektor 2 so nah wie möglich am Kern 1 aufgenommen. Wie auch in den übrigen Ausführungen der Figuren 3, 4 und 5 kann der obere Abschnitt 16 einen runden Querschnitt (im einfachsten Fall) oder einen länglichen Querschnitt haben, dessen breiteste Seite dem Kern 1 entgegen gerichtet ist, oder kann in eine Mehrzahl von eng aneinander grenzender runder Führungen aufgespalten sein, die alle gemeinsam in einen trichterförmigen Abschnitt 15 eintreten.

Figur 3 ist ähnlich Figur 2, mit Ausnahme dessen, daß der trichterförmige Abschnitt 15a exzentrisch liegt, so daß die Achse des unteren Verengungsabschnitts 17 weiter von dem Kern 1 entfernt ist, und, so daß die Absorptionswirkung in diesem Abschnitt 17 nicht nur durch seinen geringeren Querschnitt, sondern auch durch seine größere Entfernung vom Kern 1 vermindert ist.

In Figur 4 wird das Konzept von Figur 3 einen Schritt weiter entwickelt, derart, daß der trichterförmige Verengungsbereich 15b in einen verengten Führungsabschnitt 17a mündet, welcher schräg nach unten verläuft, weg von dem Kern 1 in Richtung zu einem ebenso verengten Führungsabschnitt 17b, der sich in einem bedeutend weiteren Abstand vom Kern 1 vertikal nach unten erstreckt.

Wie in Figur 5 dargestellt, kann, wenn die Dicke des Reflektors 2 einen angemessenen Raum für einen ausreichenden Abstand des unteren Führungsabschnitts 17c vom Kern 1 zuläßt, die Neutronenabsorptionswirkung in diesem Abschnitt 17c allein durch den zunehmenden Abstand ausreichend reduziert werden, wodurch möglich wird, den Führungsdurchmesser von dem oberen Abschnitt 16 nach unten durch einen kurbelförmigen Zwischenabschnitt 17d in den unteren Abschnitt 17c konstant zu halten. In diesem Fall ist die Gefahr möglicher Verstopfungen in der Führung aufgrund einer Verengung weiter reduziert, insbesondere, wenn die Krümmungen zwischen den Abschnitten 16, 17d und 17c wie dargestellt abgerundet sind.

Um jegliche Verstopfungen in der Führung zu entfernen, falls diese auftreten sollten, sieht die Erfindung für den zum Befördern der aus den bodenseitigen Enden der Führung abgezogenen SAS zurück zu den Speichergefäßen 8 vorgesehenen Gasstrom vor, daß dieser innerhalb der Führungen umgekehrt wird und in einer Aufwärtsrichtung geblasen wird.

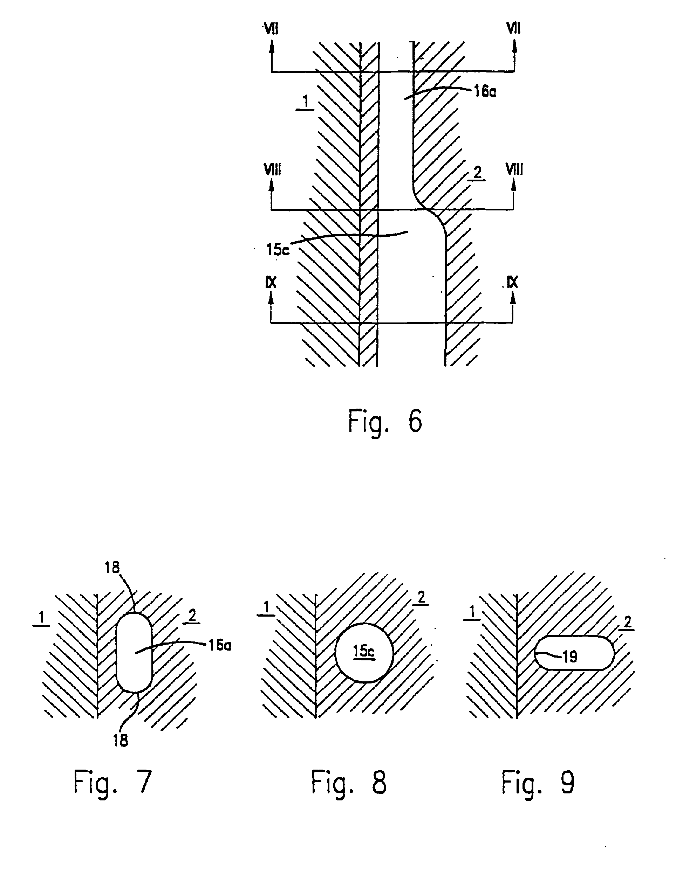

Die Figuren 5, 7, 8 und 9 zeigen eine weitere SAS-Führungskonfiguration, in welcher Verengungen vermieden werden. Wie in den Figuren 6 und 7 dargestellt ist, hat der obere Abschnitt der Führung 16a Abschnitt VII bis VII einen länglichen Querschnitt, der durch gerade parallele Wände gebildet wird, von welchen eine dem Kern 1 nahe der Grenzlinie zwischen dem Kernbereich 1 und dem Reflektorbereich 2 entgegen gerichtet ist. Die kürzeren Stirnwände 18 sind bogenförmig. An einer Schnittlinie VIII-VIII ist ein Übergangs-Führungsbereich 15c ausgeformt, in welchem, wie in Figur 8 gezeigt, sich die Querschnittsgestaltung der Führung von länglich zu kreisförmig ändert, von wo aus sich in einer Abwärtsrichtung die Querschnittsgestaltung wieder zu einer länglichen Querschnittsgestaltung ändert, siehe Figur 9, ähnlich derjenigen aus Figur 7, mit Ausnahme dessen, daß nun eine der kurzen bogenförmigen Führungswände 19 dem Kernbereich 1 entgegen gerichtet ist, während sich die langen vertikalen Seiten radial weg von dem Kernbereich 1 in den Reflektor 2 ausdehnen.

Offensichtlich sind viele Variationen der in den Figuren 2 bis 9 gezeigten Gestaltungen möglich. Zum Beispiel der Übergang von der Querschnittsgestaltung zwischen den Querschnittsgestaltungen der Figuren 7 und 9 kann sich über einen weit größeren vertikalen Abstand ausdehnen, als in Figur 6 gezeigt. Die Übergangsbereiche 15, 15a und 15b in den Figuren 2, 3 und 4 können weit spitzer und über einen viel größeren Abstand zulaufen und können sich weiter nach unten in den Bereich hinein verjüngen, der gegenwärtig als Abschnitt 17 dargestellt ist, vorausgesetzt, der Querschnittsdurchmesser ist nirgends auf weniger als 6 SAS-Durchmesser reduziert.

Der Ausdruck "umfaßt" oder "umfassend", wie hier und in den Ansprüchen verwendet, hat seine übliche, nicht beschränkende Bedeutung, die aussagt, daß zusätzlich zu Dingen, auf die sich der Ausdruck bezieht, zusätzliche Dinge enthalten sein können, die nicht speziell bedacht sind.

## Patentansprüche

1. Kernreaktor mit einem zum Regeln und Abschalten der Reaktorleistungsabgabe angepaßten Regelsystem, umfassend ein Führungssystem mit nach unten gerichteten Führungen, wobei dieses Führungssystem mit unter Schwerkraft zugeführten, frei fließfähigen, kugelartigen Neutronenabsorptionskörpern (SAS) auf einstellbare Niveaus in einer Anordnung beladbar ist, und wobei dieses Führungssystem in einem, die Seitenwand des Reaktorkerns (1), umgebenden Reflektor (2) angeordnet ist,
**dadurch gekennzeichnet,**
**daß** wenigstens eine Führung im Bereich (1) des Reaktorkerns, an dem die Leistungsabgabe reduziert ist,
a) eine Reduktion im Querschnitt aufweist, und/oder
b) eine Zunahme des Abstandes von der Wand des Reaktorkerns (1) aufweist, und/oder
c) eine Änderung in der Querschnittsgestaltung aufweist.

2. Reaktor nach Anspruch 1, in welchem wenigstens eine Führung eine graduelle Reduktion im Querschnitt aufweist.

3. Reaktor nach einem der vorhergehenden Ansprüche 1 bis 2, in welchem der minimale Querschnitt einer Führung dem 6-fachen Durchmesser eines SAS-Körpers, der < 10 mm ist, entspricht.

4. Reaktor nach einem der vorhergehenden Ansprüche 1 bis 3, in welchem der Abstand einer Führung von der Wand des Reaktorkerns (1) durch eine kurbelförmige Krümmung (17d) der Führung zunimmt.

5. Reaktor nach vorhergehendem Anspruch 4, bei dem die kurbelförmige Krümmung durch gerundete Biegungen geformt ist.

6. Reaktor nach einem der vorhergehenden Ansprüche 1 bis 5, umfassend SAS mit einem Durchmesser von weniger als 10 mm, insbesondere zwischen 4 und 8 mm.

7. Verwendung des Reaktors nach einem der vorstehenden Ansprüche 1 bis 6 zum direkten Betrieb einer Turbine für ein gasförmiges Medium.

8. Verfahren zum Regeln und Abschalten der Leistungsabgabe eines Kernreaktors nach einem der Ansprüche 1 bis 6, wobei
- als Absorptionskörper dienende SAS in dem Führungssystem des Reaktors in einer solchen Anordnung plaziert werden, daß
a) eine maximale Neutronenabsorptionswirkung in einem Bereich erzeugt wird, der an einen Teil des Reaktorkerns (1) angrenzt, an dem die maximale oder fast maximale Leistungsabgabe vorherrscht, und daß
b) eine verringerte Neutronenabsorptionswirkung in Richtung auf einen Bereich oder auf Bereiche, angrenzend an den Kern (1), erzeugt wird, an dem/denen die Leistungsabgabe reduziert ist.

9. Verfahren nach Anspruch 8, bei welchem kugelförmige Brennstoffkörper in dem Reaktorkern (1) eingesetzt werden.

10. Verfahren nach einem der Ansprüche 8 bis 9, bei dem die SAS in einer Anordnung verwendet werden,
- die eine maximale oder fast maximale Absorptionswirkung in einem Bereich, angrenzend oder nahe der oberen Hälfte des Reaktorkerns (1), erzeugt und
- eine verminderte oder nullwertige Absorptionswirkung in einem Bereich erzeugt, an dem die Leistungsabgabe maximal die Hälfte der maximalen Leistungsabgabe aufweist.

11. Verfahren nach einem der Ansprüche 8 bis 10, in welchem der Bereich der verminderten oder nullwertigen Absorptionswirkung auf einem Niveau (14) von nicht weniger als 1/10 der Gesamtkernhöhe oberhalb des Bodenreflektorbereichs (7) des Reaktors beginnt.

12. Verfahren nach einem der Ansprüche 8 bis 11, angewendet auf einen Reaktor mit mehrfachem Brennstoffdurchsatz, in welchem sich der Bereich maximaler Leistungsabgabe des Kerns (1) auf einem Niveau (10) zwischen 50 und 70% der Gesamtkernhöhe befindet und sich der Bereich der Anordnung, der für eine maximale Absorptionswirkung sorgt, nach unten auf ein Niveau (11) von nicht mehr als 30% der Gesamtkernhöhe oberhalb des Bodenreflektorbereichs (7) des Reaktors ausdehnt.

13. Verfahren nach einem der Ansprüche 8 bis 12, angewendet auf einen Reaktor der Beladungsart "Einmal-Durch-Dann-Hinaus" (OTTO), in welchem der Bereich maximaler Leistungsabgabe des Kerns (1) sich auf einem Niveau (13) zwischen 66 und 75% der Gesamtkernhöhe befindet, und in welchem sich der Bereich der Anordnung, der für eine maximale Absorptionswirkung sorgt, nach unten auf ein Niveau (12) von oberhalb 40% der Gesamtkernhöhe oberhalb des Bodenreflektorbereichs (7) des Kerns (1) erstreckt.

14. Verfahren nach Anspruch 13, in welchem sich der Bereich der Anordnung, der eine maximale Absorptionswirkung erzeugt, nach unten auf ein Niveau (9) von nicht weniger als 50% der Gesamtkernhöhe oberhalb des Bodenreflektorbereichs (7) des Kerns (1) erstreckt.

15. Verfahren nach einem der Ansprüche 8 bis 14, angewendet auf einen Reaktor zum direkten Betrieb einer Turbine für ein gasförmiges Medium.

## Revendications

1. Réacteur nucléaire ayant un système de réglage adapté pour régler et arrêter la puissance fournie par le réacteur, comprenant un système de guidage ayant des guides dirigés vers le bas, ce système de guidage pouvant être chargé jusqu'à un niveau réglable suivant certaines dispositions de corps (SAS) d'absorption de neutrons de type à boules susceptibles de s'écouler librement et apportés sous l'effet de la force de gravité et dans lequel ce système de guidage est disposé dans un réflecteur (2) entourant la paroi latérale du coeur (1) du réacteur,
**caractérisé**
**en ce qu'**au moins un guide a, dans la zone (1) du coeur du réacteur où la fourniture de puissance est réduite,
e) une réduction de la section transversale, et/ou
f) une augmentation de la distance à la paroi du coeur (1) du réacteur, et/ou
g) une variation de la forme de la section transversale.

2. Réacteur suivant la revendication 1, dans lequel au moins un guide a une réduction graduelle de la section transversale.

3. Réacteur suivant l'une des revendications précédentes 1 à 2, dans lequel la section transversale minimum d'un guide représente 6 fois le diamètre d'un corps (SAS) qui est inférieur à 10 mm.

4. Réacteur suivant l'une des revendications précédentes 1 à 3, dans lequel la distance d'un guide à la paroi du coeur (1) du réacteur augmente par une courbure (17d) en forme de manivelle du guide.

5. Réacteur suivant la revendication 4 précédente, dans lequel la courbure en forme de manivelle est formée de parties cambrées arrondies.

6. Réacteur suivant l'une des revendications précédentes 1 à 5, comprenant des SAS d'un diamètre de moins de 10 mm, notamment compris entre 4 et 8 mm.

7. Utilisation du réacteur suivant l'une des revendications précédentes 1 à 6 pour faire fonctionner directement une turbine pour un fluide gazeux.

8. Procédé de réglage et d'arrêt de la fourniture de puissance d'un réacteur nucléaire suivant l'une des revendications 1 à 6, dans lequel on met des SAS servant de corps d'absorption dans le système de guidage du réacteur en une position telle que
a) un effet d'absorption de neutrons maximum est produit dans une zone qui est voisine d'une partie du coeur (1) du réacteur où règne la fourniture de puissance maximum ou presque maximum, et en ce que
b) il est produit un effet d'absorption de neutrons diminué en direction d'une zone ou sur des zones voisines du coeur (1) sur laquelle ou sur lesquelles la fourniture de puissance est réduite.

9. Procédé suivant la revendication 8, dans lequel on utilise des corps de combustible nucléaire en forme de bille dans le coeur (1) du réacteur.

10. Procédé suivant l'une des revendications 8 à 9, dans lequel on utilise les SAS dans une position
- qui produit un effet d'absorption maximum ou presque maximum dans une zone voisine ou proche de la moitié supérieure du coeur (1) du réacteur, et
- qui produit un effet d'absorption diminué ou de valeur nulle dans une zone où la fourniture de puissance représente au maximum la moitié de la fourniture de puissance maximum.

11. Procédé suivant l'une des revendications 8 à 10, dans lequel la zone de l'effet d'absorption diminué ou de valeur nulle commence à un niveau (14) qui ne représente pas moins que le 1/10 de toute la hauteur du coeur au-dessus de la zone (7) du réflecteur de fond.

12. Procédé suivant l'une des revendications 8 à 11 utilisé sur un réacteur ayant un débit multiple de combustible nucléaire, dans lequel la zone de fourniture de puissance maximum du coeur (1) se trouve à un niveau (10) compris entre 50 et 70 % de toute la hauteur du coeur et la zone de la position, qui donne un effet d'absorption maximum, s'étend vers le bas jusqu'à un niveau (11) qui n'est pas plus que de 30 % de toute la hauteur du coeur au-dessus de la zone (7) de réflecteur du fond.

13. Procédé suivant l'une des revendications 8 à 12 utilisé sur un réacteur du type « un seul passage puis sortie » (OTTO), dans lequel la zone de fourniture de puissance maximum du coeur se trouve à un niveau compris entre 66 et 75 % de toute la hauteur du coeur et dans lequel la zone de la position, qui donne un effet d'absorption maximum, s'étend vers le bas jusqu'à un niveau (12) de plus de 40 % de toute la hauteur du coeur au-dessus de la zone (7) de réflecteur du fond du coeur (1).

14. Procédé suivant la revendication 13, dans lequel la zone de la position, qui produit un effet d'absorption maximum, s'étend vers le bas jusqu'à un niveau (9) qui n'est pas inférieur à 50 % de toute la hauteur du coeur au-dessus de la zone (7) de réflecteur du fond du coeur (1).

15. Procédé suivant l'une des revendications 8 à 14 utilisé sur un réacteur pour le fonctionnement direct d'une turbine pour un fluide gazeux.

## Claims

1. Nuclear reactor with a control system for controlling and disconnecting the reactor power output, including a guide system with guides directed downwards, in which this guide system can be loaded with free flowing, pellet type neutron absorption bodies (SAS) fed under gravity at an adjustable level in an arrangement, in which this guide system is arranged in a reflector (2) surrounding the side wall of the reactor core (1),
**characterised in**
**that** at least one guide in the area (1) of the reactor core, in which the power output is reduced,
a) has a reduction in cross section and/or
b) has an increase in the distance from the wall of the reactor core (1) and/or
c) has a change in the cross section formation.

2. Reactor according to claim 1, in which at least one guide has a gradual reduction in cross section.

3. Reactor according to one of the previous claims 1 to 2, in which the minimum cross section of a guide corresponds to 6 times the diameter of an SAS body, which is < 10 mm.

4. Reactor according to one of the previous claims 1 to 3, in which the distance of a guide from the wall of the reactor core (1) increases through a crank shaped curve (17d) in the guide.

5. Reactor according to the previous claim 4, in which the crank shaped curve is formed by rounded bends.

6. Reactor according to one of the previous claims 1 to 5, including SAS with a diameter of less than 10 mm, particularly between 4 and 8 mm.

7. Use of the reactor according to one of the previous claims 1 to 6 for the direct operation of a turbine for a gaseous medium.

8. Method for controlling and disconnecting the power output of a nuclear reactor according to claims 1 to 6, in which
- SAS used as absorption bodies in the guide system of a reactor are placed in such an arrangement that
a) a maximum neutron absorption effect is created in an area adjacent to a part of the reactor core (1), in which the maximum or almost maximum power output prevails, and that
b) a reduced neutron absorption effect is created in the direction of an area or areas adjacent to the core (1), in which the power output is reduced.

9. Method according to claim 8, in which pellet shaped fuel bodies are used in the reactor core (1).

10. Method according to one of claims 8 to 9, in which the SAS are used in an arrangement,
- which creates a maximum or almost maximum absorption effect in an area adjacent or near to the top half of the reactor core (1) and
- creates a reduced or zero absorption effect in an area, in which the power output is at most half the maximum power output.

11. Method according to one of claims 8 to 10, in which the area of reduced or zero absorption effect begins at a level (14) of not less than 1/10 of the total core height above the bottom reflector area (7) of the reactor.

12. Method according to one of claims 8 to 11 applied to a reactor with multiple fuel throughput, in which the area of maximum power output of the core (1) is at a level (10) between 50 and 70% of the total core height and the area of the arrangement ensuring a maximum absorption effect extends downwards to a level (11) of not more than 30% of the total core height above the bottom reflector area (7) of the reactor.

13. Method according to one of claims 8 to 12 applied to a reactor of the "Once Through Then Out" (OTTO) loading type, in which the area of maximum power output of the core (1) is at a level (13) between 66 and 75% of the total core height, and in which the area of the arrangement ensuring a maximum absorption effect extends downwards to a level (12) of over 40% of the total core height above the bottom reflector area (7) of the core (1).

14. Method according to claim 13, in which the area of the arrangement creating a maximum absorption effect extends downwards to a level (9) of not less than 50% of the total core height above the bottom reflector area (7) of the core (1).

15. Method according to one of claims 8 to 14 applied to a reactor for the direct operation of a turbine for a gaseous medium.
